# EUROPÄISCHE PATENTANMELDUNG

(11) **EP 4 742 032 A1**
(43) Veröffentlichungstag der Anmeldung: **13.05.2026**
(21) Anmeldenummer: 24212087.1
(22) Anmeldetag: 11.11.2024
(51) Int. Cl.: G06F 9/455, H04L 41/0803, H04L 41/0895, H04L 41/40, H04L 41/5022, H04L 45/28, G06F 11/20

(54) **SYSTEM UND COMPUTER-IMPLEMENTIERTES VERFAHREN ZUR AUSFALLSICHERUNG VON NETZWERKVERBINDUNGEN EINER CONTAINERINSTANZ MIT EINER ZUGEWIESENEN KRITIKALITÄT**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Computer-implementiertes Verfahren zur Ausfallsicherung von Netzwerkschnittstellen, die einer Containerinstanz (113) mit einer zugewiesenen Kritikalität in einer verwalteten Container-Laufzeitumgebung (112) durch einen Gastrechner (110, 120) bereitgestellt werden, umfassend die Schritte:
- Konfigurieren (S1) von mindestens einem Netzwerkschnittstellenbündel mittels einer zentralen Verwaltungseinrichtung (100) für eine Gruppe von verwalteten Laufzeitumgebungen (112), umfassend
a) Zuordnen (S11) von mindestens zwei physikalischen Netzwerkschnittstellen (117a, 117b, 117c) zu jedem der Netzwerkschnittstellenbündel (117), und
b) Einrichten (S12) von mindestens einer Verkehrsklasse, die den verschiedenen Netzwerkwerkschnittstellen (117a, 117b, 117c) des Netzwerkschnittstellenbündels (117) jeweils einen Nutzungsgrad der Übertragungsbandbreite der Netzwerkschnittstelle (117a, 117b, 117c) bei einer vorgegebenen Ausfallbedingung zuweist,
in der Laufzeitumgebung (112), in der die Containerinstanz (113) ausgeführt wird,
- Zuweisen (S2) einer abhängig von der Kritikalität der Containerinstanz (113) unterschiedlichen Verkehrsklasse zu der Containerinstanz (113),
- dynamisches Bereitstellen (S3) derjenigen Netzwerkschnittstelle (117a, 117b, 117c) des Netzwerkschnittstellenbündels (117) zur Nutzung durch die Containerinstanz (113), die von der zugewiesenen Verkehrsklasse und einer aktuell ermittelten Ausfallbedingung bestimmt ist.

## Beschreibung

### Technisches Gebiet

Die Erfindung betrifft ein Computer-implementiertes Verfahren zur Ausfallsicherung von Netzwerkverbindungen, die einer Containerinstanz mit einer zugewiesenen Kritikalität in einer verwalteten Container-Laufzeitumgebung durch einen Gastrechner bereitgestellt werden, sowie eine entsprechende Anordnung und ein Computerprogrammprodukt.

### Technischer Hintergrund

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft. Software-Container, im Weiteren kurz Container genannt, stellen somit gegenüber virtuellen Maschinen, die über ein eigenes Betriebssystem verfügen und mit Hilfe eines Hypervisors Hardware-Ressourcen des darunterliegenden Systems zugewiesen bekommen und über einen eigenen Betriebssystemkern verfügen, eine ressourcenschonende Art der Virtualisierung dar und kapseln eine in einem Container betriebene Softwarekomponente vom darunterliegenden Gastrechner ab.

Um einen Container auf dem Gastrechner starten zu können, wird aus einem Containerimage mit Hilfe einer Deployment-Konfiguration, im Weiteren auch als Bereitstellungsinformation bezeichnet, auf dem Gastrechner eine Containerinstanz erstellt und auf der Laufzeitumgebung des Gastrechners ausgeführt. Eine Deployment-Konfiguration sind beispielsweise eine Dockercompose-Datei oder ein Kubertes Manifest. Eine orchestrierte Laufzeitumgebung umfasst einen Orchestrator, bevorzugt ausgebildet durch eine Orchestrierungssoftware, die auf einem Computer ausgeführt wird, und mindestens einen Gastrechner, häufig eine Vielzahl von Gastrechnern, die dem Orchestrator zugeordnet sind. Orchestrator und der mindestens eine orchestrierte Gastrechner bilden ein Cluster. Der Orchestrator startet, verwaltet und beendet Containerinstanzen auf den zugeordneten Gastrechnern. Typische orchestrierte Laufzeitumgebungen sind hierbei Kubernetes-basierte Containerumgebungen, die beispielsweise Cloud-basierte Container-as-a-Services-Umgebungen oder in einer Cloud betriebene virtuelle Instanzen als Knoten einer orchestrierten Laufzeitumgebung verwalten.

Containerinstanzen kommunizieren über eine von der Container-Laufzeitumgebung zugewiesene Netzwerkschnittstelle zu anderen Containerinstanzen, die lokal auf dem gleichen darunterliegenden Gastrechner, auch als Host bzw. Knoten bezeichnet, betrieben werden. Weiterhin wird die Netzwerkschnittstelle verwendet, um zu Containerinstanzen auf anderen Knoten oder zu externen Diensten, außerhalb der gegebenenfalls orchestrierten Laufzeitumgebung zu kommunizieren. Die Kommunikation erfolgt hierbei üblicherweise über IP-Adressen, welche dynamisch von der Container-Laufzeitumgebung und/oder dem Orchestrator verwaltet werden und den Instanzen beim Start zugewiesen werden.

Ein Failover, das heißt ein Umschalten zur Ausfallsicherung, bei Netzwerkschnittstellen bezieht sich auf den Prozess, bei dem automatisch auf eine redundante Netzwerkschnittstelle umgeschaltet wird, wenn die primäre Netzwerkschnittstelle ausfällt. Dies stellt sicher, dass eine Netzwerkverbindung kontinuierlich aufrechterhalten wird, selbst wenn eine Netzwerkschnittstelle nicht mehr funktioniert. Wenn die primäre Netzwerkschnittstelle ausfällt, übernimmt eine sekundäre Netzwerkschnittstelle automatisch die Netzwerkverbindung, ohne dass manuelles Eingreifen erforderlich ist.

Bei nicht in der Cloud betriebenen Geräten, die eine Container-Laufzeitumgebung bereitstellen, besteht das Problem, dass diese an physikalische Netzwerke angebunden werden und diese ohne zusätzliche Maßnahmen nicht per se - wie bei virtuellen Netz-werkanbindungen - transparent mit hochverfügbarer Netzwerkanbindung ausgestattet sind.

Bekannt ist, das Problem zu beheben, indem auf dem darunterliegenden Gastrechner physikalische Netzwerkschnittstellen mittels einem Bonding- oder Teaming-Verfahren zusammengefasst werden und der Ausfallmechanismus hierüber realisiert wird. Dabei werden beispielsweise zwei physikalische Interfaces an unterschiedliche, redundant ausgelegte Netzwerk-Switches angebunden und beim Ausfall eines Interfaces oder Switches wird die Kommunikation über das andere, verbleibende Interface realisiert.

Eine Übertragungsbandbreite der physikalischen Interfaces ist dabei nicht konstant, sondern kann sich, beispielsweise durch unterschiedliche Auslastung des Netzwerkes oder durch eine umgebungsabhängige Qualität einer Funkschnittstelle, insbesondere bei sich bewegenden Gastrechnern, signifikant verändern.

Häufig werden Containerinstanzen unterschiedliche Prioritäten mit unterschiedlicher Kritikalität zugewiesen und auf der Container-Laufzeitumgebung des Gastrechner betrieben. Problem bei dem Bonding-Verfahren ist, dass die Kritikalität einzelner auf dem Host betriebener Container-Instanzen nicht berücksichtigt werden kann, sondern dieses sich global auf den Gastrechner auswirkt. Somit kann bei verknappten Ressourcen auf dem Failover-Interface einer weniger kritischen Containerinstanz keine reduzierte oder ggf. gar keine Bandbreite angeboten werden, um einer kritischen Containerinstanz eine höhere Bandbreite bereitstellen zu können.

### Zusammenfassung der Erfindung

Es ist somit die Aufgabe der vorliegenden Erfindung eine ausreichende Übertragungsbandbreite für die Containerinstanz abhängig von deren Kritikalität sicherzustellen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Computer-implementiertes Verfahren zur Ausfallsicherung von Netzwerkschnittstellen, die einer Containerinstanz mit einer zugewiesenen Kritikalität in einer verwalteten Container-Laufzeitumgebung durch einen Gastrechner bereitgestellt werden, umfassend die Schritte:
- Konfigurieren von mindestens einem Netzwerkschnittstellenbündel mittels einer zentralen Verwaltungseinrichtung für eine Gruppe von verwalteten Laufzeitumgebungen auf einem Gastrechner, umfassend
   a) Zuordnen von mindestens zwei physikalischen Netzwerkschnittstellen zu jedem der Netzwerkschnittstellenbündel, und
   b) Einrichten von mindestens einer Verkehrsklasse, die den verschiedenen Netzwerkwerkschnittstellen (jeder Netzwerkschnittstelle) des Netzwerkschnittstellenbündels jeweils einen Nutzungsgrad der Übertragungsbandbreite der Netzwerkschnittstelle bei einem vorgegebenen Ausfallbedingung zuweist,
      in der Laufzeitumgebung, in der die Containerinstanz ausgeführt wird,
- Zuweisen einer abhängig von der Kritikalität der Containerinstanz unterschiedlichen Verkehrsklasse zu der Containerinstanz, und
- dynamisches Bereitstellen derjenigen Netzwerkschnittstelle des Netzwerkschnittstellenbündels zur Nutzung durch die Containerinstanz, die von der zugewiesenen Verkehrsklasse und einer aktuell ermittelten Ausfallbedingung bestimmt ist.

Mit Hilfe der Netzwerkschnittstellenbündel und der Verkehrsklassen, die den Container-instanzen abhängig von ihrer Kritikalität zugewiesen werden, kann sichergestellt werden, dass im Failover-Fall bei auftretender Ressourcenknappheit ausgeführte Container-Instanzen, welche die Verkehrsklassen referenzieren, dynamisch in ihrer Netzwerk-Bandbreite beschränkt werden.

In einer vorteilhaften Ausführungsform werden für alle verwalteten Laufzeitumgebungen aus der Gruppe von verwalteten Laufzeitumgebungen gleichartige Aliasnamen für die jeweiligen physikalischen Netzwerkschnittstellen definiert und die Aliasnamen für die Zuordnung der Netzwerkschnittstellen zu einem Netzwerkschnittstellenbündel verwendet.

Das Referenzieren von physikalischen Netzwerkschnittstellen innerhalb eines Clusters von verwalteten Laufzeitumgebungen hat den Vorteil, dass clusterweit unterschiedliche Hardware-Konfigurationen betrieben werden können und diese auf gleiche Weise referenziert werden können. Dies verringert den Aufwand und die Komplexität der Verwaltung der Netzwerkschnittstellen und -bündel.

In einer vorteilhaften Ausführungsform wird jedem konfigurierten Netzwerkschnittstellenbündel ein unterschiedlicher Bündelname zuwiesen, der innerhalb der Gruppe von verwalteten Laufzeitumgebungen eindeutig ist.

Somit kann jedes einzelne Netzwerkschnittstellenbündel in einem Cluster von verwalteten Laufzeitumgebungen eindeutig adressiert werden. Dies ermöglicht eine einfache, wenig fehleranfällige Konfiguration.

In einer vorteilhaften Ausführungsform umfasst jedes Netzwerkschnittstellenbündel fol-gende Information:
- eine bevorzugte Netzwerkschnittstelle als Hauptschnittstelle,
- mindestens eine weitere Netzwerkschnittstelle des Netzwerkschnittstellenbündels als Rückfallschnittstelle, und die für die weitere Netzwerkschnittstellen eingerichteten Verkehrsklassen, und/oder
- Angaben, die Modalitäten zur Bestimmung eines Ausfallsicherungsfalls angeben.

Somit kann eine Konfiguration der Rückfallschnittstellen, die zur Ausfallsicherung verwendet werden, an die Verkehrsklassen gebunden werden.

In einer vorteilhaften Ausführungsform wird bei mehr als einer Rückfallschnittstelle den verschiedenen Rückfallschnittstellen eine Priorität zugeordnet, die die Reihenfolge angibt, mit der die jeweiligen Rückfallschnittstellen aktiviert werden.

Dies ermöglicht ein mehrstufiges, flexibles Ausfallsicherungskonzept das unterschiedliche Rückfallschnittstellen mit beispielsweise unterschiedliche Übertragungsarten umfasst. Unterschiedliche Übertragungsarten sind beispielsweise eine WLAN-Verbindung, eine Ethernet-Verbindung oder eine Funkschnittstelle.

In einer vorteilhaften Ausführungsform ist jeder Rückfallschnittstelle mindestens eine Verkehrsklasse und ein Nutzungsgrad der von der Rückfallschnittstelle bereitgestellten Übertragungsbandbreite zugeordnet.

Somit können sehr flexibel auch Bruchteile der Kapazität einer Netzwerkschnittstelle als Rückfallschnittstelle konfiguriert werden.

In einer vorteilhaften Ausführungsform wird eine Konfiguration der Netzwerkschnittstellenbündel von der zentralen Verwaltungseinrichtung an eine Schnittstellensteuereinheit auf der Laufzeitumgebung weiterleitet, und die Schnittstellensteuereinheit richtet das Verkehrsbündel entsprechend der Konfiguration ein.

Somit können die in dem Netzwerkschnittstellenbündel zusammengefassten Netzwerkschnittstellen-Konfigurationen auf den Laufzeitumgebungen und damit auf den einzelnen Gastrechnern im Verbund einfach und zuverlässig validiert werden.

In einer vorteilhaften Ausführungsform wird bei einem Über- bzw. Unterschreiten des Überwachungsparameters die Rückfallschnittstelle entsprechend der eingestellten Konfiguration der Rückfallschnittstelle von der Schnittstellensteuereinheit anpasst.

Damit kann eine Anpassung der Rückfallschnittstelle direkt auf dem Gastrechner und ohne Rücksprache mit der zentralen Verwaltungsvorrichtung durchgeführt werden, und somit Übertragungsbandbreite und Prozessorkapazität einzusparen.

In einer vorteilhaften Ausführungsform werden bei einem Überschreiten oder Unterschreiten des Überwachungsparameters die Netzwerkschnittstellen der Containerinstanz von der Hauptnetzwerkschnittstelle auf die höchstrangige Rückfallschnittstelle umgestellt.

Somit ist eine hohe Ausfallsicherheit gegeben.

In einer vorteilhaften Ausführungsform wird bei einem Überschreiten oder Unterschreiten des Überwachungsparameters mindestens eine Rückfallschnittstelle der Hauptnetzwerkschnittstelle zugeordnet.

Somit wird die nicht mehr benötigte Übertragungsbandbreite der Rückfallschnittstelle wieder für die Hauptnetzwerkschnittstelle freigegeben und so der Normalbetrieb optimiert.

Gemäß einem zweiten Aspekt betrifft die Erfindung eine Anordnung zur Ausfallsicherung von Netzwerkschnittstellen, die einer Containerinstanz mit einer zugewiesenen Kritikalität in einer verwalteten Container-Laufzeitumgebung durch einen Gastrechner bereitgestellt werden, umfassend
eine zentrale Verwaltungseinrichtung, die derart ausgebildet ist,
   - mindestens ein Netzwerkschnittstellenbündel für eine Gruppe von verwalteten Laufzeitumgebungen zu konfigurieren, umfassend
      a) Zuordnen von mindestens zwei physikalischen Netzwerkschnittstellen zu jedem der Netzwerkschnittstellenbündel, und
      b) Einrichten von mindestens einer Verkehrsklasse, die den verschiedenen Netzwerkwerkschnittstellen des Netzwerkschnittstellenbündels jeweils einen Nutzungsgrad der Übertragungsbandbreite der Netzwerkschnittstelle bei einem vorgegebenen Ausfallbedingung zuweist,
   und
eine Laufzeitumgebung, in der die Containerinstanz ausgeführt wird, die derart ausgebildet ist,
   - der Containerinstanz eine abhängig von der Kritikalität der Containerinstanz unterschiedliche Verkehrsklasse zuzuweisen, und
   - diejenige Netzwerkschnittstelle des Netzwerkschnittstellenbündels zur Nutzung durch die Containerinstanz dynamisches bereitzustellen, die von der zugewiesenen Verkehrsklasse der Containerinstanz und einer aktuell ermittelten Ausfallbedingung bestimmt ist.

Die Anordnung ermöglicht es Containerinstanzen abhängig von Ihrer Kritikalität dynamisch in ihrer Netzwerk-Bandbreite beschränkt werden. Des Weiteren ermöglicht es den Failover-Mechanismus außerhalb der Containerinstanz auf dem darunterliegenden Gastrechner, genauer dessen Laufzeitumgebung realisiert, sodass ein Angreifer innerhalb des Containers keinen Einfluss auf die Konfiguration nehmen kann.

In einer vorteilhaften Ausführungsform umfasst die Anordnung eine Schnittstellensteuereinheit, die das Netzwerkschnittstellenbündel entsprechend der Konfiguration einrichtet

Gemäß einem dritten Aspekt betrifft die Erfindung ein Computerprogrammprodukt, umfassend ein nicht flüchtiges computer-lesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens durchzuführen.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk realisiert sein.

### Exemplarische Ausführungsbeispiele der Zeichnung

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine erstes Ausführungsbeispiel des erfindungsgemäßen Verfahrens als Ablaufdiagramm;
- Fig. 2: eine Ausführungsbeispiel des erfindungsgemäßen Systems in schematischer Darstellung;
- Fig. 3: ein Ausführungsbeispiel einer Konfigurationsdatei umfassend zugewiesenen Verkehrsklassen eines erfindungsgemäßen Netzwerkschnittstellenbündels; und
- Fig. 4: ein zweites Ausführungsbeispiel des erfindungsgemäßen Verfahrens als Sequenzdiagramm.
Einander entsprechende Teile sind in allen Figuren mit den gleichen Bezugszeichen versehen.

Sofern es in der nachfolgenden Beschreibung nicht anders angegeben ist, beziehen sich die Begriffe "konfigurieren", "zuordnen", "einrichten", "bereitstellen" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Die Anordnung und darin optional enthaltene Komponenten, wie beispielsweise ein Gastrechner bzw. die auf dem Gastrechner implementierte Container-Laufzeitumgebung, die Verwaltungsvorrichtung, und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Verfahrensschritte bzw. Funktionalitäten können durch eine Kombination aus Hardware, Firmware und Software realisiert sein. Alle Verfahrensschritte werden durch eine oder mehrere Komponenten der Anordnung ausgeführt. Entsprechend sind alle mit der Anordnung beschriebenen Funktionalitäten als Verfahrensschritte des beschriebenen Verfahrens anzusehen.

### Detaillierte Beschreibung der Ausführungsbeispiele

Unabhängig vom grammatikalischen Geschlecht eines bestimmten Begriffes sind Personen mit männlicher, weiblicher oder anderer Geschlechteridentität mit umfasst.

Sollen Containerinstanzen in einer Ausführungsumgebung mit unterschiedlicher Priorität ausgeführt werden, so wird jeder der Containerinstanz eine Kritikalitätskennung, im Weiteren verkürzt als Kritikalität bezeichnen, zugewiesen. Anhand dieser Kritikalität wird die Ausführung und insbesondere die Bereitstellung von Übertragungskapazität in Form von Netzwerkschnittstellen für die Containerinstanz mehr oder weniger bevorzugt durchgeführt. Diese Priorisierung soll auch bei der Ausfallsicherung gewährleistet werden.

Der grundlegende Gedanke des beschriebenen Verfahrens besteht darin, dass ein Administrator einer Container-Ausführungsumgebung mit Hilfe einer zentralen Verwaltungsvorrichtung für eine Gruppe verwalteter Gastrechner auf den Gastrechnern bereitgestellte Netzwerkschnittstellen zur Sicherstellung der Ausfallsicherheit miteinander gruppiert und diesen verschiedene Verkehrsklassen zuordnet. Die Container-Ausführungsumgebung kann eine orchestrierte Ausführungsumgebung, beispielsweise durch eine Kubernetes Software orchestriert, oder auch eine nicht-orchestrierte Ausführungsumgebung sein. Mit Hilfe dieser Verkehrsklassen wird sichergestellt, dass im Failover-Fall, d.h. wenn zur Ausfallsicherung bei auftretender Ressourcenknappheit ausgeführte Containerinstanzen, welche die Verkehrsklassen referenzieren, dynamisch und abhängig von der ihnen zugewiesenen Kritikalität in ihrer Übertragungsbandbreite beschränkt werden.

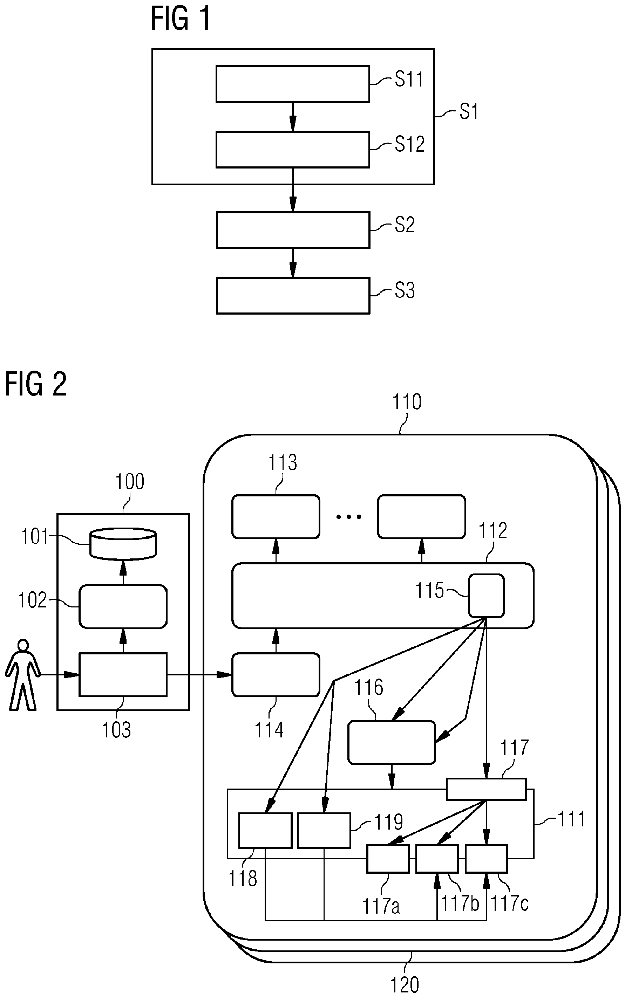

Anhand von Fig.1 wird das Verfahren im Detail erläutert.

Zur Ausfallsicherung von Netzwerkschnittstellen, die einer Containerinstanz mit einer zugewiesenen Kritikalität in einer verwalteten Container-Laufzeitumgebung durch einen Gastrechner bereitgestellt werden, werden folgende Schritte durchgeführt.

In einem ersten Schritt S1 wird mindestens einem Netzwerkschnittstellenbündel für eine Gruppe von verwalteten Laufzeitumgebungen mittels einer zentralen Verwaltungseinrichtung konfiguriert. Dazu werden mindestens zwei physikalischen Netzwerkschnittstellen zu jedem der Netzwerkschnittstellenbündel zugeordnet, siehe S11. Anschließend wird mindestens einer Verkehrsklasse eingerichtet, die den verschiedenen Netzwerkwerkschnittstellen des Netzwerkschnittstellenbündels jeweils einen Nutzungsgrad der Übertragungsbandbreite der Netzwerkschnittstelle bei einem vorgegebenen Ausfallbedingung zuweist, siehe S12.

In jeder Laufzeitumgebung aus der Gruppe von verwalteten Laufzeitumgebungen wird nun eine unterschiedlichen Verkehrsklasse der Containerinstanz zugewiesen, wobei die Containerinstanzen mit unterschiedlicher Kritikalität unterschiedliche Verkehrsklasse zugeordnet werden, siehe S2. Der Containerinstanz wird im Betrieb nun diejenige Netzwerkschnittstelle des Netzwerkschnittstellenbündels bereitgestellt, die von der zugewiesenen Verkehrsklasse und einer aktuell ermittelten Ausfallbedingung bestimmt ist, siehe S3.

Für verwaltete Laufzeitumgebungen werden gleichartige Aliasnamen für die jeweiligen physikalischen Netzwerkschnittstellen definiert. Für die Zuordnung zu einem Netzwerkschnittstellenbündel werden die Aliasnamen der Netzwerkschnittstellen verwendet. jedem konfigurierten Netzwerkschnittstellenbündel ein unterschiedlicher Bündelname zu-wiesen wird, der innerhalb der Gruppe von verwalteten Laufzeitumgebungen eindeutig ist. Innerhalb der Verkehrsklasse können mehrere Ausfallbedingungen angegeben sein. Die Netzwerkschnittstelle wir mit dem Nutzungsgrad aktiviert, die den jeweiligen Ausfallbedingungen oder einer Kombination der Ausfallbedingungen entspricht.

Die Konfiguration der Netzwerkschnittstellenbündel wird von der zentralen Verwaltungseinrichtung an eine Schnittstellensteuereinheit, die auf jede der Laufzeitumgebungen eingerichtet ist, weiterleitet. Die Schnittstellensteuereinheit richtet anschließend das Netzwerkschnittstellenbündel entsprechend der Konfiguration ein. Die Schnittstellensteuereinheit leitet Ober- bzw. Untergrenzen für Überwachungsparameter, für die mindestens eine Rückfallschnittstelle aus den Ausfallbedingungen ab und überwacht diese Überwachungsparameter. Bei einem Über- bzw. Unterschreiten des Überwachungsparameters wird die Rückfallschnittstelle entsprechend der eingestellten Konfiguration der Rückfallschnittstelle von der Schnittstellensteuereinheit anpasst. Bei einem Überschreiten oder Unterschreiten des Überwachungsparameters werden die Netzwerkschnittstellen der Containerinstanz von der Hauptnetzwerkschnittstelle auf die höchstrangige Rückfallschnittstelle umgestellt. Bei einem Überschreiten oder Unterschreiten des Überwachungsparameters wird mindestens eine Rückfallschnittstelle der Hauptnetzwerkschnittstelle zugeordnet.

Fig.2 zeigt ein Ausführungsbeispiel der Anordnung, die derart ausgebildet ist, die beschriebenen Verfahrensschritte auszuführen.

Die Anordnung umfasst eine zentrale Verwaltungsvorrichtung 100 sowie eine Gruppe von mindestens zwei Gastrechnern 110, 120. Jeder Gastrechner 110, 120 umfasst Hardware-Ressourcen, insbesondere Netzwerkschnittstellen von unterschiedlichem Typ. In Fig. 2 sind beispielsweise eine als Ethernet-Netzwerkschnittstelle 117a, eine WLAN-Netzwerkschnittstell 117b sowie eine Funk-basierte Netzwerkschnittstelle, die bspw. gemäß einem 5G Standard ausgebildet ist, dargestellt. Der Gastrechner 110, 120 umfasst einen Betriebssystemkern 111 auf dem mindestens eine Überwachungs-einheit 118, 119 ausgebildet ist. Der Gastrechner 110, 120 umfasst eine Container-Laufzeitumgebung 112, hier synonym abgekürzt als Laufzeitumgebung 112 bezeichnet, auf der mindestens eine Containerinstanz 113 ausgeführt wird.

Die vorgeschlagene Lösung basiert auf einer Netzwerkschnittstellen-Erweiterung, auch als CNI plugin bezeichnet, die zwei Komponenten umfasst. Eine erste Komponente der Netzwerkschnittstellen-Erweiterung ist in der zentralen Verwaltungsvorrichtung 100 implementiert und umfasst einen Bündelkonfigurator 102 und einen Konfigurationsspeicher 101.

Dies ermöglicht es zentral Plausibilitätsprüfungen bei der Konfiguration der NSB durchzuführen, Verkehrsprofile für die jeweiligen NSS zu definieren oder auch bei unterschiedlichen Hardware-Konfigurationen der Gastrechner 110, 120 unterschiedliche Aliasnamen für die physikalischen Netzwerkschnittstellen 117a, ..., 117c zu definieren.

Die in Fig. 2 dargestellte Anordnung zeigt eine orchestrierte Containerumgebung, in der die zentrale Verwaltungsvorrichtung 100 zusätzlich eine Orchestrierungseinheit 103 zur Steuerung und Verwaltung eines Clusters aus den Gastrechnern 110, 120 umfasst. Hierbei ist es besonders einfach zentral diese Prüfungen und die Konfiguration durchzuführen. Das Referenzieren von physikalischen Schnittstellen 117a, ..., 117c innerhalb des Clusters hat den Vorteil, dass clusterweit unterschiedliche Hardware-Konfigurationen betrieben werden können und diese auf gleiche Weise referenziert werden können.

In einer nicht orchestrierten Containerumgebung wird die Konfiguration der NSSbündel 117 zentral durchgeführt, die Plausibilitätsprüfung jedoch erst beim Einbringen der Konfiguration in die verschiedenen Gastrechner 110, 120 durchgeführt.

Nachdem der Bündelkonfigurator 102 innerhalb der zentralen Verwaltungsvorrichtung 100 aktiviert ist, kann ein Administrator 104 oder ein entsprechend berechtigter Benutzer für alle verwalteten Laufzeitumgebungen 112 über eine Eingabeeinheit (nicht dargestellt) gleichartige Aliasnamen für die jeweiligen physikalischen NSS 117a, ..., 117c definieren.

Sollen beispielsweise die primäre Ethernet-Schnittstelle 117a, die verbundene WLAN-Schnittstelle 117b und die Funkschnittstelle 117c in einem NSSbündel 117 zusammengefasst werden, so werden für jeden Gastrechner 110, 120 einmalig entsprechende Schnittstellen-Konfigurationen zugeordnet, sodass für den Gastrechner 110 die Ethernet-Schnittstelle 117a dem Aliasnamen "Primary", die WLAN-Schnittstelle 117b dem Aliasnamen "Wifi" und die Funkschnittstelle 117c dem Aliasnamen "5G" zugeordnet wird. Jede Zuordnung wird vom Bündelkonfigurator 102 durch Abfrage auf den Gastrechnern 110, 120 und deren aktueller Schnittstellenkonfiguration auf Plausibilität überprüft und anschließend im Konfigurationsspeicher 101 persistent gespeichert, sodass später die zentrale Verwaltungsvorrichtung bei der Durchführung einer Konfiguration auf einem Gastrechner die tatsächlichen NSS-Namen zuordnen kann.

Für die Erfindung wird angenommen, dass Netzwerkschnittstellen 117a, ..., 117c an sich nicht über die zentrale Verwaltungsvorrichtung 100 verwaltet werden und stattdessen die Konfiguration zentral auf dem Gastrechner erfolgt, sodass beispielsweise für die WLAN NSS 117b kein Anmeldepasswort durch diese zugeordnet werden müssen.

Ist die Zuordnung abgeschlossen, werden durch den Administrator 104 entsprechende NSB 117 konfiguriert. Im Rahmen dieses Vorganges wird ein clusterweit eindeutiger NSB-Name konfiguriert und eine bevorzugte Netzwerkschnittstelle als Hauptschnittstelle und mindestens eine weitere Netzwerkschnittstelle des Netzwerkschnittstellenbündels 117 als Rückfallschnittstelle referenziert. Die NSB-Konfiguration umfasst für die weitere Netzwerkschnittstellen, d.h. die Rückfallschnittstelle eingerichteten Verkehrsklassen. Optional können weitere Angaben, die die Ausfallbedingungen zur Bestimmung eines Ausfallsicherungsfalls angeben in der NSB-Konfiguration enthalten sein. Diese Angaben zu den Ausfallbedingungen für die zu erzeugende Rückfallschnittstelle sind beispielsweise ein Probe-Interfall, d.h. eine Intervalldauer zwischen einer periodischen Ausführung eines Überwachungsprogrammes, eine Überschreitung einer Latenzzeit, ein Ping auf Default-Router via Layer2 oder Layer3. Diese können innerhalb der NSB-Definition ebenfalls konfiguriert werden.

Optional kann das NSB nicht für den gesamten Cluster, sondern nur auf einer Teilmenge von Gastrechnern 110, 120 des Clusters zur Verfügung gestellt werden. Eine solche Beschränkung ist beispielsweise durch den Einsatz und das Referenzieren von Kubernetes-Node-Selektoren oder sonstigen bestimmten regulären Ausdrücken, welche eine Gruppe von verwalteten Gastrechner eindeutig referenziert, möglich.

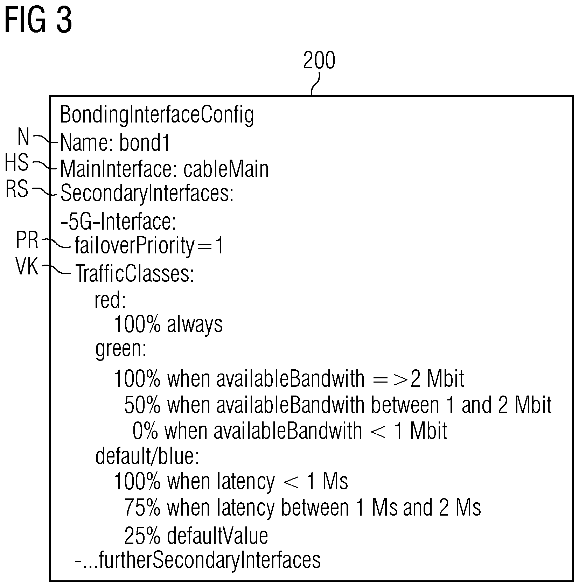

Fig. 3 zeigt ein Ausführungsbeispiel einer NSB-Konfigurationsdatei 200 mit zugewiesenen Verkehrsklassen VK. Die Konfigurationsdatei 200 enthält einen Namen N, der dem NSB zugeordnet ist, sowie eine als Hauptschnittstelle HS zugeordnete physikalische Schnittstelle, sowie Angaben zu mindestens einer Rückfallschnittstelle RS, hier bei-spielsweise wird die mit dem Aliasnamen 5G bezeichnete Netzwerkschnittstelle zuge-wiesen. Bei mehr als einer Rückfallschnittstelle ist den verschiedenen Rückfallschnitt-stellen eine Priorität PR zugeordnet, die die Reihenfolge angibt, mit der die jeweilige Rückfallschnittstelle aktiviert wird. Der mindestens einen Rückfallschnittstelle RS sind die Verkehrsklassen VK zugeordnet, hier Verkehrsklassen mit der Bezeichnung "red", "green" und "default/blue". Für jede Verkehrsklasse ist ein Nutzungsgrad der von der Rückfallschnittstelle bereitgestellten Übertragungsbandbreite zugeordnet. Der Nutzungsgrad ist eine relative Angabe in Bezug auf die gesamte Übertragungsbandbreite der Rückfallschnittstelle oder eine absolute Bandbreitenangabe.

Mit Hilfe dieser Verkehrsklassen wird definiert, unter welchen Bedingungen die Containerinstanzen 113, welche der jeweiligen Verkehrsklasse zugeordnet sind, wie viel Übertragungsbandbreite erhalten. In dem in Fig.3 dargestellten Beispiel sind Prozentzahlen der zur Verfügung stehenden Gesamtbandbreite dargestellt. Optional ist es jedoch auch möglich, absolute Werte, beispielsweise 5Mbit/s zu bestimmen. Dies würde in die-sem Fall eine Obergrenze darstellen, sofern die tatsächliche Übertragungsbandbreite an den NSS im Failover-Fall nicht zur Verfügung stünde. Innerhalb der Verkehrsklasse VK können mehrere Kriterien, d.h. Ausfallbedingungen, definiert werden, wann eine Bandbreitenbeschränkung umgesetzt werden soll. Beispielsweise wird die zur Verfügung stehende Gesamtbandbreite der Rückfallschnittstelle verwendet, wenn die aktuell zur Verfügung stehende Rest-Bandbreite unterschritten oder die Latenz zu einem bestimmten zu konfigurierenden Referenzpunkt überschritten wird. Generell ist es auch möglich unterschiedliche Aspekte von Ausfallbedingungen miteinander zu kombinieren.

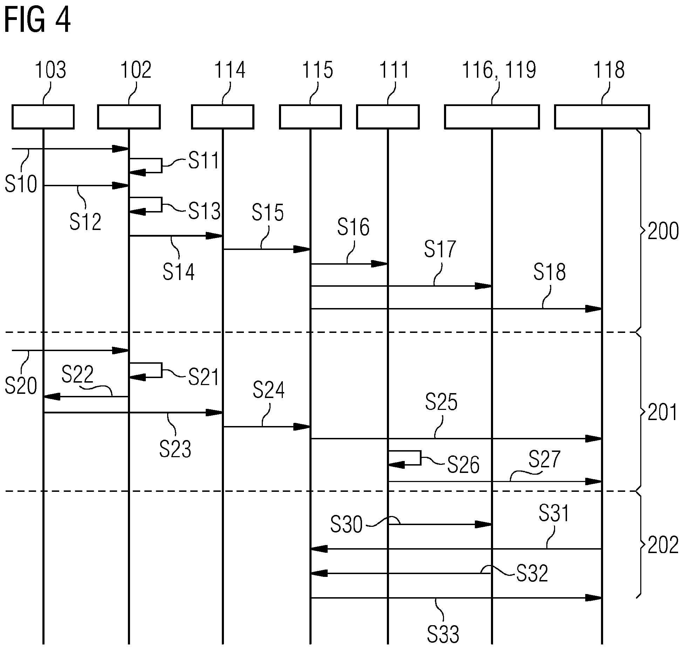

Fig. 4 zeigt ein Sequenzdiagramm, das die verschiedenen Verfahrensschritte im zeitlichen Ablauf ausgeführt auf den Komponenten der Anordnung darstellt. Die Referenzzeichen der ausführenden Komponenten der Anordnung entsprechen der in Fig. 2 gezeigten Anordnung. Im Abschnitt 200 sind die Schritte zur Konfiguration des NSBs auf den Gastrechnern 110, 120 dargestellt. Der Abschnitt 201 zeigt das Erzeugen einer Containerinstanz, der NSB zugewiesen werden. Der Abschnitt 202 zeigt das Regeln der Übertragungsbandbreite zur Ausfallsicherheit für die Containerinstanz.

Nach dem Eingang einer Zuweisungsaufforderung S10 für das NSB 117 in der Orchestrierungseinheit 103 wird diese an den Bündelkonfigurator 112 weitergeleitet und dort die Aufforderung und die Persistierung im Speicher 101 überprüft, siehe S11.

Zur Einrichtung eines NSB 117 wird die Konfigurationsdatei von der Orchestrierungseinheit 103 and den Bündelkonfigurator 102 weitergegeben, siehe S12. Der Bündelkonfigurator 102 führt zunächst eine Plausibilitätsprüfung S13 durch, indem z.B. überprüft wird, ob der Name des NSB 117 eindeutig ist und die für die auf den referenzierten NSS auf den relevanten Gastrechnern 110, 120 entsprechende Alias-Namen und diese entsprechend konfiguriert sind. Anschließend wird das NSB 117 auf den jeweiligen Gastrechnern 110, 120 entsprechend eingerichtet.

Dazu wird eine Konfigurationsanfrage S14 an einen Orchestrierungsclient 114 auf dem Gastrechner 110, 120, und von dort an die Schnittstellensteuereinheit 115, siehe S15 weitergeleitet. Aufgrund der in der Konfigurationsdatei definierten Verkehrsklassen und Ausfallbedingungen leitet die Schnittstellensteuereinheit 115 entsprechende Ober- und/oder Untergrenzen ab. Das NSB 117 wird vom Betriebssystemkern 111 des Gast-rechners erzeugte, siehe S16. Die Ober- und/oder Untergrenzen werden abhängig von den Ausfallbedingungen an Überwachungseinheiten 116, 119 wie beispielsweise cAdvi-sor oder entsprechende eBPF-Programme übergeben, siehe S17 und von einer Firewall im Gastrechner, bspw. nftables überwacht, siehe S18. Idee ist hierbei, dass Alarmierungsregeln sich auf das Failover-Interface und nicht auf das NBS 117 beziehen.

Diese Alarmierungsregeln werden so lange nicht verändert, solange sich auf der Schnittstellensteuerungseinheit 115 die Konfiguration des NSB 117 nicht ändert.

Beim Erzeugen einer Containerinstanz, siehe Abschnitt 201, geht in der Orchestrierungseinheit 103 eine Bereitstellungsanfrage mit einer Referenzierung auf ein NSC und gegebenenfalls Verkehrsklassen ein. Diese Anfrage wird an den Bündelkonfigurator 102 weitergeleitet, siehe S20. Dort wird eine Plausibilitätsprüfung S21 durchgeführt und nach einer Rückmeldung S22 von der Orchestrierungseinheit 102 eine Aufforderung zur Bereitstellung einer Containerinstanz S23 an den Orchestrierungsclient 114 im Gastrechner 110 weitergeleitet. Die Containerinstanz wird erzeugt und mindestens ein NSB 117 durch die Schnittstellensteuereinheit 115 erstellt, siehe S24. In der Überwachungseinheit 118 werden die Überwachungsregeln entsprechend der Ausfallsbedingungen und Verkehrsklasse eingerichtet, siehe S25. Wird eine Änderung der Auslastung im Kernel 116 des Gastrechners festgestellt, siehe S26, wird dies an die Überwachungseinheit 118 gemeldet, siehe S27.

Überwachte entsprechende Events werden direkt auf den Gastrechner 110, 120 bzw auf die darauf betriebene Schnittstellensteuereinheit 115 weitergeleitet wird und diese entsprechend direkt und nicht über die zentrale Verwaltungsvorrichtung 100 verarbeitet.

Zur Verarbeitung der Events erforderliche Informationen werden beim Einspielen der NSB-Konfiguration ebenfalls über das Management-System dem CNI-Plugin zur Verfügung gestellt. Unter der Annahme, dass die Verbindung zur zentralen Verwaltungsvorrichtung 100 auch beim Start des Gastrechners 110 zur Verfügung steht, müssen diese Informationen nicht lokal persistiert werden.

Tritt während der Laufzeit der Containerinstanz ein Event auf, wird dieses mit dem lokal zwischengespeicherten Regelwerk, das die Ausfallbedingungen mit den Verkehrsklassen der Containerinstanz verknüpft abgeglichen, siehe S30 und eine Schnittstellen-Konfiguration des jeweiligen Rückfallschnittstelle - und nicht der Hauptschnittstelle durchgeführt. Dazu werden durch die Schnittstellensteuereinheit 115 entsprechende QoS-Regeln auf dem lokalen Gastrechner durch Absetzen bestimmter nftables-Kommandos, siehe S31, S32 für die jeweilige Rückfallschnittstelle durchgeführt. Die Überwachungsregeln auf der Überwachungseinheit 18 werden entsprechend angepasst S33.

Die Zuordnung einer zu startenden Containerinstanz zu einem NSB muss im Rahmen des Verfahrens mit Hilfe einem entsprechenden Referenzieren innerhalb der Bereitstellungskonfiguration der Containerinstanz erfolgen. Dies kann z.B. mit Hilfe entsprechender Metadaten der Containerinstanz erfolgen. Ist keine gültige Referenz angegeben, kann entweder ein Standard-Schnittstelle durch die Orchestrierungseinheit 103 in der zentrale Verwaltungsvorrichtung 100 zugewiesen werden, welches innerhalb des Bündelkonfigurators 102 konfiguriert wird. Alternativ wird ein Start der Containerinstanz abgebrochen.

Dies ist auch der Fall, wenn ein NSB nicht Cluster-weit, sondern nur auf einer Teilmenge des Clusters zur Verfügung steht. In diesem Fall kann entweder der Start unterbunden werden. Alternativ wird die Containerinstanz ausschließlich auf Gastrechnern ausgeführt, welche über das NSV verfügen. Das jeweilige Verhalten ist innerhalb des Bün-delkonfigurators 102 oder der Orchestrierungseinheit 103 zu konfigurieren.

Während der Startphase einer Containerinstanz wird vom Schnittstellensteuerungsein-heit 115 ausgewertet, ob diese ein spezielles, auf dem Gastrechner zur Verfügung stehendes Bonding-Interface anfordert. Ist dies der Fall, werden gemäß der oben beschriebenen abgeleiteten lokal verfügbaren Konfigurationsregeln entsprechende Überwachungsregeln implementiert, indem diese auf der Rückfallschnittstelle zugeordneten IP-Adresse zugewiesen werden bzw. die IP-Adresse durch Aufnahme der Adresse in ein vordefiniertes nftables IP-Set, siehe Überwachungseinheit 118einer bestehenden Regel zugeordnet wird.

Grundsätzlich können mehrere Überwachungseinheiten 118, 119 oder auch die Kernel-Überwachungssteuerung 116 entsprechende Metriken überwachen. Diese können entweder vom Kernel 111 eventbasiert geliefert werden oder von den jeweiligen Überwachungseinheiten 116, 118, 119 zyklisch ermittelt werden und an die Schnittstellensteuereinheit 115 weitergeleitet werden. Die Überwachungsintervalle können in diesem Fall für die jeweiligen Lösungen eigenständig bestimmt werden.

Tritt ein Ausfall-Event auf, wird eine Verlagerung von der Haupt - auf das am höchsten priorisierte, zur Verfügung stehende Rückfallschnittstelle außerhalb des Containers durchgeführt. Sollen für mehrere Klassen von Containern unterschiedliche Failover-Varianten verwendet werden, können auf dem gleichen Cluster unterschiedliche NSB definiert werden, welche Rückfallschnittstellen unterschiedlich priorisieren und diesen auch unterschiedliche Verkehrsklassen zuordnen.

Weiterhin wäre es in einer abgewandelten Variante möglich, dass bei der Erkennung von Ressourcenknappheit einer Hauptschnittstelle temporär ein oder mehrere Rückfall-schnittstellen zugeordnet werden. In diesem Fall wird auf analoge Weise die Hauptschnittstelle bzw. das NSB überwacht und eine analoge Konfiguration durchgeführt.

Somit unterscheidet sich das vorgeschlagene Verfahren von bekannten Verfahren dadurch, dass unterschiedliche physikalische Interfaces in beliebiger Kombination zu verschiedenen NSB zusammengesetzt werden. Den Failover-Interfaces können unter-schiedliche Verkehrsklassen zugewiesen werden, die aufgrund des jeweiligen Auslastungsgrades dynamisch für unterschiedliche Gruppen von Containern angepasst werden können. Der Failover-Mechanismus der Ausfallsicherung wird außerhalb der Container auf dem darunterliegenden Gastrechner realisiert, sodass ein Angreifer innerhalb des Containerinstanz keinen Einfluss auf die Konfiguration nehmen kann.

Des Weiteren wird der Standard-Failover-Mechanismus des darunterliegenden Betriebssystems verwendet. Die Anpassung der Quality of Service (QoS)-basierten Konfiguration der Failover-Interfaces, d.h. Überwachungsregeln entsprechend der Ausfallsbedingungen und Verkehrsklasse, erfolgt sowohl außerhalb des Failover-Falles als auch im Failover-Fall. Für das Verfahren können unterschiedliche Monitoring-Lösungen verwendet werden, welche das Container Network Interface (CNI) - Plugin, d.h. die Schnittstellensteuereinheit auswertet. Das Netzwerkschnittstellenbündel wird nicht auf Betriebssystems-Ebene, sondern vom CNI-Plugin verwaltet. Hierbei werden die Schnittstellen über entsprechende Alias-Namen referenziert, sodass potenziell unterschiedliche Hardware-Konfigurationen mit unterschiedlichen Netzwerkschnittstellen-Namen Cluster-weit unterstützt werden können.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computer-implementiertes Verfahren zur Ausfallsicherung von Netzwerkschnittstellen, die einer Containerinstanz (113) mit einer zugewiesenen Kritikalität in einer verwalteten Container-Laufzeitumgebung (112) durch einen Gastrechner (110, 120) bereitgestellt werden, umfassend die Schritte:
- Konfigurieren (S1) von mindestens einem Netzwerkschnittstellenbündel mittels einer zentralen Verwaltungseinrichtung (100) für eine Gruppe von verwalteten Laufzeitumgebungen (112), umfassend
a) Zuordnen (S11) von mindestens zwei physikalischen Netzwerkschnittstellen (117a, 117b, 117c) zu jedem der Netzwerkschnittstellenbündel (117), und
b) Einrichten (S12) von mindestens einer Verkehrsklasse, die den verschiedenen Netzwerkwerkschnittstellen (117a, 117b, 117c) des Netzwerkschnittstellenbündels (117) jeweils einen Nutzungsgrad der Übertragungsbandbreite der Netzwerkschnittstelle (117a, 117b, 117c) bei einer vorgegebenen Ausfallbedingung zuweist,
in der Laufzeitumgebung (112), in der die Containerinstanz (113) ausgeführt wird,
- Zuweisen (S2) einer abhängig von der Kritikalität der Containerinstanz (113) unterschiedlichen Verkehrsklasse zu der Containerinstanz (113),
- dynamisches Bereitstellen (S3) derjenigen Netzwerkschnittstelle (117a, 117b, 117c) des Netzwerkschnittstellenbündels (117) zur Nutzung durch die Containerinstanz (113), die von der zugewiesenen Verkehrsklasse und einer aktuell ermittelten Ausfallbedingung bestimmt ist.

2. Computer-implementiertes Verfahren nach Anspruch 1, wobei für alle verwalteten Laufzeitumgebungen (112) aus der Gruppe von verwalteten Laufzeitumgebungen gleichartige Aliasnamen für die jeweiligen physikalischen Netzwerkschnittstellen (117a, 117b, 117c) definiert werden und für die Zuordnung zu einem Netzwerkschnittstellenbündel (117) die Aliasnamen der Netzwerkschnittstellen (117a, 117b, 117c) verwendet werden.

3. Computer-implementiertes Verfahren nach einem der vorangehenden Ansprüche, wobei jedem konfigurierten Netzwerkschnittstellenbündel (117) ein unterschiedlicher Bündelname zuwiesen wird, der innerhalb der Gruppe von verwalteten Laufzeitumgebungen (112) eindeutig ist.

4. Computer-implementiertes Verfahren nach einem der vorangehenden Ansprüche, wobei jedes Netzwerkschnittstellenbündel (117) folgende Information umfasst:
- eine bevorzugte Netzwerkschnittstelle (117a, 117b, 117c) als Hauptschnittstelle (HS),
- mindestens eine weitere Netzwerkschnittstelle (117a, 117b, 117c) des Netzwerkschnittstellenbündels (117) als Rückfallschnittstelle (RS), und die für die weitere Netzwerkschnittstellen (117a, 117b, 117c) eingerichteten Verkehrsklassen, und/oder
- Angaben, die Ausfallbedingungen zur Bestimmung eines Ausfallsicherungsfalls angeben.

5. Computer-implementiertes Verfahren nach Anspruch 4, wobei bei mehr als einer Rückfallschnittstelle (RS) den verschiedenen Rückfallschnittstellen (RS) eine Priorität zugeordnet wird, die die Reihenfolge angibt, mit der die jeweiligen Rückfallschnittstellen (RS) aktiviert werden.

6. Computer-implementiertes Verfahren nach einem der Ansprüche 4-5, wobei jeder Rückfallschnittstelle (RS) mindestens eine Verkehrsklasse und ein Nutzungsgrad der von der Rückfallschnittstelle (RS) bereitgestellten Übertragungsbandbreite zugeordnet ist.

7. Computer-implementiertes Verfahren nach einem der Ansprüche 4-6, wobei der Nutzungsgrad eine relative Angabe in Bezug auf die gesamte Übertragungsbandbreite der Rückfallschnittstelle (RS) oder eine absolute Bandbreitenangabe ist.

8. Computer-implementiertes Verfahren nach einem der vorangehenden Ansprüche, wobei innerhalb der Verkehrsklasse mehrere Ausfallbedingungen angegeben sind, und die Netzwerkschnittstelle (117a, 117b, 117c) mit dem Nutzungsgrad aktiviert wird, die den jeweiligen Ausfallbedingungen oder einer Kombination der Ausfallbedingungen entspricht.

9. Computer-implementiertes Verfahren nach einem der vorangehenden Ansprüche, wobei eine Konfiguration der Netzwerkschnittstellenbündel (117) von der zentralen Verwaltungsvorrichtung (100) an eine Schnittstellensteuereinheit (115) auf der Laufzeitumgebung (112) weiterleitet wird, und die Schnittstellensteuereinheit (115) das Netzwerkschnittstellenbündel (117) entsprechend der Konfiguration einrichtet.

10. Computer-implementiertes Verfahren nach Anspruch 9, wobei die Schnittstellensteuereinheit (115) Ober- bzw. Untergrenzen für Überwachungsparameter, für die mindestens eine Rückfallschnittstelle (RS) aus den Ausfallbedingungen ableitet und diese Überwachungsparameter überwacht.

11. Computer-implementiertes Verfahren nach Anspruch 10, wobei bei einem Über- bzw. Unterschreiten des Überwachungsparameters die Rückfallschnittstelle (RS) entsprechend der eingestellten Konfiguration der Rückfallschnittstelle (RS) von der Schnittstellensteuereinheit (115) anpasst wird.

12. Computer-implementiertes Verfahren nach Anspruch 11, wobei bei einem Überschreiten oder Unterschreiten des Überwachungsparameters die Netzwerkschnittstellen (117a, 117b, 117c) der Containerinstanz (113) von der Hauptschnittstelle (HS) auf die höchstrangige Rückfallschnittstelle (RS) umgestellt werden.

13. Computer-implementiertes Verfahren nach Anspruch 9, wobei bei einem Überschreiten oder Unterschreiten des Überwachungsparameters mindestens eine Rückfallschnittstelle (RS) der Hauptschnittstelle (HS) zugeordnet wird.

14. Anordnung zur Ausfallsicherung von Netzwerkschnittstellen, die einer Containerinstanz mit einer zugewiesenen Kritikalität in einer verwalteten Container-Laufzeitumgebung (112) durch einen Gastrechner (110, 120) bereitgestellt werden, umfassend,
eine zentrale Verwaltungseinrichtung (100), die derart ausgebildet ist,
- mindestens ein Netzwerkschnittstellenbündel (117) für eine Gruppe von verwalteten Laufzeitumgebungen (112) zu konfigurieren, umfassend
a) Zuordnen von mindestens zwei physikalischen Netzwerkschnittstellen (117a, 117b, 117c) zu jedem der Netzwerkschnittstellenbündel (117), und
b) Einrichten von mindestens einer Verkehrsklasse, die den verschiedenen Netzwerkwerkschnittstellen (117a, 117b, 117c) des Netzwerkschnittstellenbündels (117) jeweils einen Nutzungsgrad der Übertragungsbandbreite der Netz-werkschnittstelle (117a, 117b, 117c) bei einem vorgegebenen Ausfallbedingung zuweist,
und
eine Laufzeitumgebung (112), in der die Containerinstanz (113) ausgeführt wird, die derart ausgebildet ist,
- der Containerinstanz (113) eine abhängig von der Kritikalität der Containerinstanz (113) unterschiedliche Verkehrsklasse zuzuweisen, und
- diejenige Netzwerkschnittstelle (117a, 117b, 117c) des Netzwerkschnittstellenbündels (117) zur Nutzung durch die Containerinstanz (113) dynamisches bereitzustellen, die von der zugewiesenen Verkehrsklasse der Containerinstanz (113) und einer aktuell ermittelten Ausfallbedingung bestimmt ist.

15. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens nach einem der Ansprüche 1 bis 13 durchzuführen.
